# EUROPÄISCHE PATENTSCHRIFT

(11) **EP 3 717 297 B1**
(45) Veröffentlichungstag und Bekanntmachung des Hinweises auf die Patenterteilung: **13.10.2021**
(21) Anmeldenummer: 18819001.1
(22) Anmeldetag: 30.11.2018
(51) Int. Cl.: B60K 35/00, B60K 37/02, B60K 37/04, B60R 11/02, B60R 11/00

(54) **DISPLAYEINSTELLSYSTEM UND VERFAHREN ZUR POSITIONIERUNG EINES DISPLAYS FÜR EINE INSTRUMENTENTAFEL EINES FAHRZEUGES**
DISPLAY ADJUSTMENT SYSTEM AND METHOD FOR POSITIONING A DISPLAY FOR A DASHBOARD OF A VEHICLE
SYSTÈME DE RÉGLAGE D'AFFICHEUR ET PROCÉDÉ DE POSITIONNEMENT D'UN AFFICHEUR POUR UN TABLEAU DE BORD DE VÉHICULE

(30) Priorität: 01.12.2017 DE 102017221711
(43) Veröffentlichungstag der Anmeldung: 07.10.2020
(73) Patentinhaber: Audi AG, 85045 Ingolstadt (DE)
(72) Erfinder: HÉLOT, Jacques, 85051 Ingolstadt (DE); WU, Yunzhou, 100126 Beijing (CN)
(86) Internationale Anmeldenummer: PCT/EP2018/083074
(87) Internationale Veröffentlichungsnummer: WO 2019/106119

(56) Entgegenhaltungen:
- EP-A1- 1 671 845
- DE-A1-102015 011 614
- DE-A1-102015 226 586
- DE-A1-102016 011 461
- DE-U1-202013 010 582
- DE-U1-202015 103 992

## Beschreibung

Die Erfindung betrifft ein Displayeinstellsystem für eine Instrumententafel eines Fahrzeuges und ein Verfahren zur Positionierung des Displays.

In Fahrzeugen ist es gängig, Displays/Bildschirme in einer Instrumententafel/ einem Armaturenbrett des Fahrzeuges zu platzieren, um einem Fahrzeuginsassen einen Zugriff zu Medien oder Anwendungen zu ermöglichen. In der Regel ist ein derartiges Display / ein derartiger Bildschirm derart in der Instrumententafel des Fahrzeuges angeordnet, dass ein Fahrzeuginsasse, beispielsweise ein Fahrzeugführer, während einer manuellen Fahrt auf das Display bzw. den Bildschirm, der oftmals als Touchscreen ausgebildet ist, zugreifen kann.

Aus dem Dokument DE 10 332 586 B3 ist eine Mittelkonsole zur Aufnahme von elektrischen Geräten und Schaltelementen bekannt. Die Mittelkonsole umfasst dabei ein Display für eine Anzeige von Informationen eines Navigationssystems, wobei das Display in seiner Position in Richtung eines Fahrers verstellt werden kann.

Aus der DE 10 2011 000 924 A1 ist eine Anordnung einer Anzeige-Eingabeeinheit in einem Fahrzeug bekannt. Die Anzeige- Eingabeeinheit ist quer zu einer Fahrzeuglängsrichtung verschiebbar gelagert.

Aus dem Dokument DE 10 2014 016 222 A1 sind ein Verfahren und ein System zum Betreiben einer berührungssensitiven Anzeigeeinrichtung eines Kraftwagens bekannt.

Weiterer relevanter Stand der Technik ist aus der DE 10 2016 011461 A1 bekannt.

Im Stand der Technik sind somit Vorrichtungen und Verfahren zur Positionierung eines Displays in einer Instrumententafel bekannt. Bei diesen wird jedoch nicht berücksichtigt, dass an eine Position eines Displays bei einer manuellen und einer pilotierten Fahrt unterschiedliche Anforderungen gestellt werden. Bei einer manuellen Fahrt ist das Display aufgrund des vorhandenen, für die manuelle Steuerung benötigten, Lenkrades derart positioniert, dass dieses von einer Mitte der Instrumententafel in Richtung einer Beifahrerseite des Fahrzeuges weist. Bei einem Wechsel von der manuellen zu der pilotierten Fahrt, in der das Lenkrad in der Regel nicht benötigt wird und eingespart werden kann / bzw. eingeklappt werden kann, erfolgt oftmals auch ein Wechsel der Sitzposition der Fahrzeuginsassen. So wird beispielsweise bei dem Übergang von der manuellen Fahrt zur pilotierten Fahrt ein Sitz des Fahrzeugführers oftmals automatisch nach hinten bewegt und die Rückenlehne des Sitzes automatisch oder auf Wunsch des Insassen zurückgeneigt. Dadurch ändert sich die Sitzposition des Fahrzeugführers in dem Fahrzeug, wodurch ein Zugriff auf das in der Instrumententafel angeordnete Display verschlechtert wird.

Daher ist es Aufgabe der vorliegenden Erfindung, eine Vorrichtung und ein Verfahren bereitzustellen, mit der bzw. mit dem ein Zugriff auf ein Display und eine Sichtbarkeit des Displays in der Instrumententafel des Fahrzeuges während einer pilotierten Fahrt verbessert werden kann.

Diese Aufgabe wird durch ein Display mit den Merkmalen des Patentanspruchs 1, ein Verfahren mit den Merkmalen des Patentanspruchs 4 sowie ein Fahrzeug mit den Merkmalen des Patentanspruchs 8 gelöst.

Gegenstand der vorliegenden Erfindung ist ein Displayeinstellsystem für eine Instrumententafel in einem Fahrzeug, umfassend ein Display und eine Einstellvorrichtung.

Erfindungsgemäß ist die Einstellvorrichtung eingerichtet, das Display von einer ursprünglichen Position in der Instrumententafel des Fahrzeuges in eine zentrale Position in einem Innenraum des Fahrzeuges einzustellen bzw. zu bewegen. In der Regel ist die Einstellvorrichtung als mindestens ein Gelenkarm ausgebildet. Die Einstellvorrichtung ist in der Instrumententafel angeordnet bzw. befestigt, wobei ein erstes Ende des mindestens einen Gelenkarms mit der Instrumententafel verbunden ist und ein zweites Ende des mindestens einen Gelenksarms mit dem Display verbunden ist. Vorzugsweise ist der mindestens eine Gelenksarm in der Instrumententafel dabei über ein Drehgelenk mit der Instrumententafel verbunden. Die derart angeordnete Einstellvorrichtung ermöglicht es, das Display, welches in der Instrumententafel angeordnet ist, von einer ursprünglichen in der Instrumententafel angeordneten Position des Displays in eine von der Instrumententafel berührungsfreien / losgelösten, zentralen Position in dem Innenraum des Fahrzeuges einzustellen bzw. zu bringen. Eine zentrale Position ist eine Position, die mittig zwischen den Vordersitzen des Fahrzeuges ausgebildet ist und somit sowohl für einen Fahrzeugführer als auch für einen Beifahrer des Fahrzeuges gleich leicht zugänglich ist. In der Regel ist der mindestens eine Gelenkarm ausfahrbar eingerichtet. Besonders vorteilhaft weist die Einstellvorrichtung mindestens zwei Gelenkarme auf. Dies bietet den Vorteil, dass ein länglich ausgebildetes Display stabil in eine neue Position eingestellt werden kann.

In Ausgestaltung ist die Einstellvorrichtung eingerichtet, das Display entlang einer Mittellängsachse des Fahrzeuges und quer zu der Mittellängsachse des Fahrzeuges einzustellen. In der Regel ist der mindestens eine Gelenkarm der Einstellvorrichtung ausfahrbar eingerichtet, wodurch eine Einstellung des an dem Gelenkarm angeordneten Displays entlang der Mittellängsachse des Fahrzeuges durchführbar ist. Dadurch kann das Display näher an den Fahrzeuginsassen herangeführt werden. Der mindestens eine Gelenkarm weist beispielsweise ein Drehgelenk auf, wodurch eine Einstellung des an dem Gelenkarm angeordneten Displays quer zu der Mittellängsachse durchführbar ist. Die derart eingerichtete Einstellvorrichtung ermöglicht die zentrale Positionierung des Displays im Innenraum des Fahrzeuges.

Erfindungsgemäß ist das Displayeinstellsystem eingerichtet, die Position des Displays bei einer pilotierten Fahrt des Fahrzeuges automatisch einzustellen. Dies bietet den Vorteil, dass das Displayeinstellsystem den Anforderungen an eine Position eines Displays bei einer pilotierten Fahrt entsprechen kann. Bei einer pilotierten Fahrt sind die Fahrzeugsitze der Fahrzeuginsassen oftmals nach hinten verschoben und die Rückenlehnen der Fahrzeugsitze in Richtung des Hecks des Fahrzeuges zurückgeneigt. Durch das erfindungsgemäße Displayeinstellsystem ist das Display von der ursprünglichen Position in der Instrumententafel, die unvorteilhaft für eine pilotierte Fahrt ist, in eine zentrale Position im Innenraum des Fahrzeugs einstellbar, wodurch ein Fahrzeuginsasse, beispielsweise der Fahrzeugführer oder der Beifahrer einen verbesserten Zugriff und eine verbesserte Sicht auf das Display erhält. In einer Weiterbildung der Erfindung ist die Einstellvorrichtung eingerichtet, bei einem Wechsel von einer manuellen Fahrt des Fahrzeuges zu einer pilotierten Fahrt des Fahrzeuges das Display automatisch oder manuell durch den Fahrzeuginsassen von der ursprünglichen Position in der Instrumententafel in die zentrale Position in dem Innenraum des Fahrzeuges einzustellen. Eine automatische Positionierung des Displays ist für den Fahrzeuginsassen besonders komfortabel, da das Display automatisch ohne Zutun des Fahrzeuginsassen in eine Position verstellt werden kann, in der der Fahrzeuginsasse komfortabel auf das Display zugreifen kann.

Optional wird der Wechsel von der manuellen Fahrt zu der pilotierten Fahrt durch den Fahrzeuginsassen / den Fahrzeugführer aktiv durchgeführt. Dabei ist das Einstellsystem eingerichtet, bei einem Wechsel von einer manuellen Fahrt zu einer pilotierten Fahrt das Display in eine zentrale Position einzustellen. Um das Display in eine zentrale Position einstellen zu können, wird zunächst das Lenkrad in eine für die pilotierte Fahrt vorteilhafte Position gebracht. Eine für die pilotierte Fahrt vorteilhafte Position ist dabei eine Position, in der dem Fahrzeugführer mehr Platz zur Verfügung steht. Dies ist in der Regel der Fall, wenn das Lenkrad in Richtung der Instrumententafel nach vorn bewegt, eingeklappt oder abgenommen wird. Zur Durchführung des Wechsels von der manuellen Fahrt zu der pilotierten Fahrt durch den Fahrzeuginsassen bzw. den Fahrzeugführer wird ein Signal in Form einer Gestik, einer Berührung des Displays, welches vorzugsweise als Touch-Display ausgebildet ist, einer Betätigung einer Eingabetaste oder eines Sprachbefehls an das Fahrzeug gesendet. Wenn ein derartiges Signal des Fahrzeuginsassen an das Fahrzeug oder das Displayeinstellsystem gesendet wird, wird das Lenkrad in eine für eine pilotierte Fahrt vorteilhafte Position gebracht. Das Displayeinstellsystem ist eingerichtet, das Display in eine zentrale Position einzustellen bzw. zu bewegen, sobald das Lenkrad in einer für die pilotierte Fahrt vorteilhaften Position ist. Die Positionierung des Displays durch das Displayeinstellsystem kann automatisch durchgeführt werden oder durch einen Fahrzeuginsassen manuell ausgeführt werden. In Ausgestaltung ist eine Anzeigefläche des Displays erweiterbar.

Beispielsweise kann die Anzeigefläche des Displays um eine weitere Anzeigefläche erweitert werden, so dass die Anzeigefläche des Displays insgesamt vergrößert wird. In der Regel ist die mindestens eine weitere Anzeigefläche mittels einer Klappvorrichtung an dem Display angeordnet. Die Klappvorrichtung ist vorzugsweise im Wesentlichen als Scharnier ausgebildet. Die Anzeigefläche des Displays und die weitere Anzeigefläche sind als Pixelflächen ausgebildet, wobei bei einer Erweiterung der Anzeigefläche des Displays mit der weiteren Anzeigefläche die Pixelflächen der Anzeigefläche des Displays und der weiteren Anzeigefläche aneinander liegend angeordnet sind. Bei einer manuellen Fahrt ist die Klappvorrichtung typischerweise eingeklappt. Dabei ist die mindestens eine weitere Anzeigefläche derart eingeklappt, dass diese im Wesentlichen horizontal in einem Winkel von annähernd 90° von einer Rückseite der Anzeigefläche des Displays, welche in Richtung der Instrumententafel zeigt, angeordnet ist.

In der Regel ist die mindestens eine weitere Anzeigefläche somit bei einer manuellen Fahrt mittels der Klappvorrichtung in der Instrumententafel des Fahrzeuges verborgen. Die mindestens eine weitere Anzeigefläche wird dabei in eingeklapptem Zustand durch ein Gehäuse der Instrumententafel gehalten bzw. an einem Aufklappen gehindert. Bei einer pilotierten Fahrt erfolgt eine Einstellung des Displays entlang der Mittellängsachse des Fahrzeuges, wodurch ein Abstand des Displays zu der Instrumententafel vergrößert wird. Durch die Vergrößerung des Abstandes zwischen dem Display und der Instrumententafel wird ebenfalls der Abstand der eingeklappten Anzeigefläche zu dem Gehäuse der Instrumententafel erhöht und schließlich kontaktlos, wodurch die Klappvorrichtung ausgelöst wird und die mindestens eine weitere Anzeigefläche aufgeklappt wird, wodurch die Anzeigefläche des Displays insgesamt vergrößert wird.

Gegenstand der Erfindung ist auch ein Verfahren zur Positionierung eines Displays in einem Fahrzeug umfassend ein voranstehend beschriebenes Displayeinstellsystem .

Erfindungsgemäß wird in einem ersten Schritt das Display durch die Einstellvorrichtung ausgehend von der ursprünglichen Position des Displays in der Instrumententafel entlang der Mittellängsachse des Fahrzeuges in Richtung eines Hecks des Fahrzeuges positioniert. Durch die Positionierung des Displays entlang der Mittellängsachse des Fahrzeuges wird das Display näher an den Fahrzeuginsassen, beispielsweise den Fahrzeugführer oder den Beifahrer herangeführt. Der Abstand zwischen Display und Fahrzeuginsasse verringert sich dadurch, wodurch für den Fahrzeuginsassen bei einer pilotierten Fahrt mit einer zurückgelehnten Sitzposition des Oberkörpers des Fahrzeuginsassen ein Zugriff auf das Display erleichtert wird.

In einem weiteren Schritt wird das Display durch die Einstellvorrichtung quer zu der Mittellängsachse des Fahrzeuges in Richtung eines Fahrersitzes des Fahrzeuges positioniert und dadurch das Displays in die zentrale Position in dem Innenraum des Fahrzeuges eingestellt bzw. gebracht. Der weitere Schritt kann zeitgleich oder nachfolgend zu dem ersten Schritt ausgeführt werden. Bei einer pilotierten Fahrt ist ein Lenkrad in dem Fahrzeug nicht zwingend erforderlich, wodurch das Lenkrad eingeklappt oder eingespart werden kann und der bisherige Raum, der für das Lenkrad benötigt wurde, zur Nutzung zur Verfügung steht. Anschließend kann durch die Positionierung des Displays quer zu der Mittellängsachse des Fahrzeugs in Richtung des Fahrersitzes das Display in eine zentrale Position des Fahrzeuginnenraums gebracht werden. Das zentral positionierte Display kann dabei in einen Bereich hineinragen, der ehemals durch das nun eingesparte Lenkrad ausgefüllt wurde. Das Lenkrad kann bei einem Wechsel von einer manuellen Fahrt zu einer pilotierten Fahrt etwas nach vorne in Richtung der Instrumententafel verschoben werden, sodass das Display positionierbar Ist. Das Lenkrad kann auch so weit nach vorne in Richtung der Instrumententafel verschoben werden, dass das Lenkrad an der Instrumententafel andockt bzw. angeordnet ist. Das Lenkrad kann alternativ auch abgenommen oder eingeklappt werden.

Das erfindungsgemäße Verfahren bietet den Vorteil, dass das Display in dem Fahrzeug derart eingestellt werden kann, dass die eingestellte Position den Anforderungen, die an eine Position des Displays bei der pilotierten Fahrt gestellt werden, entsprechen kann. Durch das erfindungsgemäße Verfahren kann somit das Display von der ursprünglichen Position in der Instrumententafel, die bei der pilotierten Fahrt unvorteilhaft ist, in eine zentrale Position im Innenraum des Fahrzeugs eingestellt werden. Dadurch kann der Fahrzeuginsasse, beispielsweise der Fahrzeugführer oder der Beifahrer, leichter auf das Display zugreifen.

In Ausgestaltung wird das Verfahren bei der pilotierten Fahrt des Fahrzeuges oder bei einem Wechsel von einer manuellen Fahrt des Fahrzeuges zu einer pilotierten Fahrt des Fahrzeuges ausgeführt. Insbesondere bei Fahrzeugen, die sowohl manuell als auch pilotiert geführt werden können, ist es vorteilhaft, wenn das Verfahren bei einem Wechsel von der manuellen Fahrt des Fahrzeugs zu der pilotierten Fahrt des Fahrzeuges automatisch ausgeführt wird. Dies bietet dem Fahrzeuginsassen einen besonders hohen Komfort, da es keiner Handlung seitens des Fahrzeuginsassen bedarf, um das Display in eine für die pilotierte Fahrt vorteilhafte, zentrale Position einzustellen. Alternativ kann die Einstellung durch eine Eingabe, beispielsweise einen Sprachbefehl oder eine Tasteneingabe aktiv ausgeführt werden.

In einer Weiterbildung des Verfahrens wird eine Anzeigefläche des Displays erweitert. In der Regel wird mit der Positionierung des Displays entlang der Mittellängsachse des Fahrzeuges die Anzeigefläche des Displays automatisch erweitert. Durch die Positionierung des Displays entlang der Mittellängsachse des Fahrzeuges wird ein größerer Abstand zwischen Display und Instrumententafel ausgebildet, wodurch die mindestens eine weitere Anzeigefläche kontaktlos zu der Instrumententafel wird, wodurch die mindestens eine weitere Anzeigefläche über die Klappvorrichtung ausgelöst und die Anzeigefläche des Displays vergrößert wird.

In Ausgestaltung wird bei einer Beendigung einer pilotierten Fahrt des Fahrzeuges das Display durch die Einstellvorrichtung von der zentralen Position in dem Innenraum des Fahrzeuges in die ursprüngliche Position in der Instrumententafel zurückführt. Besonders vorteilhaft wird bei einem Fahrzeug, welches sowohl manuell als auch pilotiert geführt werden kann, bei einer Beendigung der pilotierten Fahrt, das Display durch die Einstellvorrichtung von der zentralen Position in dem Innenraum des Fahrzeugs zurück in die ursprüngliche Position in der Instrumententafel verschoben. In der Regel wird in diesem Fall das Lenkrad für eine manuelle Führung des Fahrzeuges wieder bereitgestellt.

Gegenstand der Erfindung ist auch ein Fahrzeug umfassend ein voranstehend beschriebenes Displayeinstellsystem.

Die Erfindung ist anhand von Ausführungsformen in der Zeichnung schematisch dargestellt und wird unter Bezugnahme auf die Zeichnung weiter beschrieben, wobei gleiche Komponenten mit gleichen Bezugsziffern gekennzeichnet sind. Es zeigt:
- Fig. 1a: eine schematische Drauf- und Seitenansicht einer Ausführungsform eines nicht erfindungsgemäßen Displayeinstellsystems bei einem Wechsel von einer manuellen Fahrt zu einer pilotierten Fahrt,
- Fig. 1b: eine schematische Drauf- und Seitenansicht der in Fig. 1a gezeigten Ausführungsform des Displayeinstellsystems bei einer pilotierten Fahrt,
- Fig. 2a: eine schematische Drauf- und Seitenansicht einer weiteren Ausführungsform des erfindungsgemäßen Displayeinstellsystems mit einer Erweiterung / weiteren Anzeigefläche des Displays bei einem Wechsel von einer manuellen Fahrt zu einer pilotierten Fahrt,
- Fig. 2b: eine schematische Drauf- und Seitenansicht einer Erweiterung der in Fig. 2a gezeigten Ausführungsform des erfindungsgemäßen Displayeinstellsystems mit einer Erweiterung / weiteren Anzeigefläche des Displays bei einer pilotierten Fahrt,
- Fig. 3: einen schematischen Verlauf einer Ausführungsform des erfindungsgemäßen Verfahrens zur Positionierung eines Displays in einem Fahrzeug umfassend ein voranstehend beschriebenes Displayeinstellsystem.

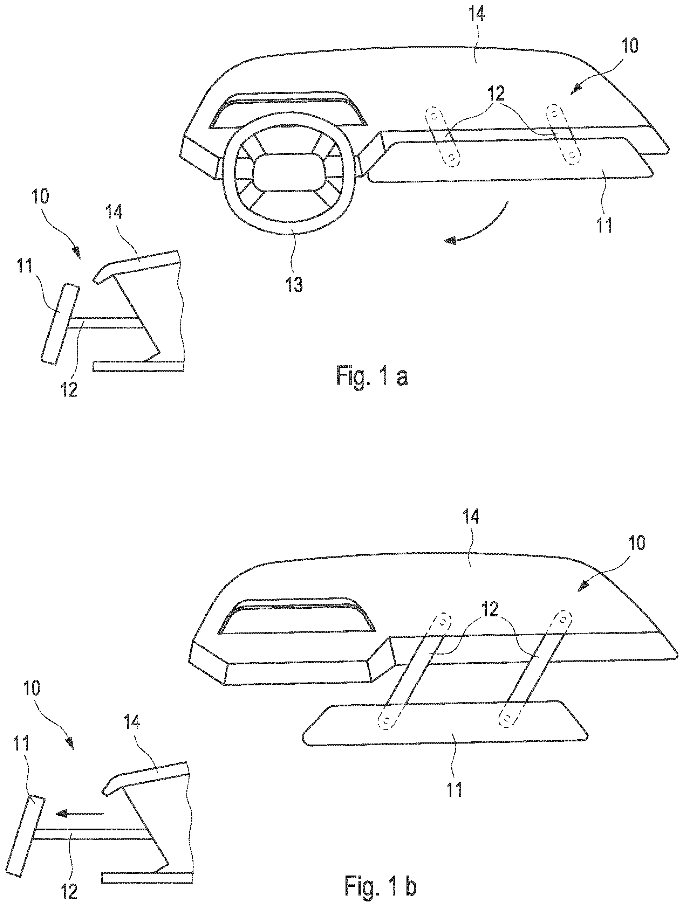

Figur 1a zeigt eine schematische Drauf- und Seitenansicht einer Ausführungsform eines Displayeinstellsystems 10 bei einem Wechsel von einer manuellen Fahrt zu einer pilotierten Fahrt. Dabei ist eine Instrumententafel 14 eines - nicht gezeigten - Fahrzeuges mit einem Lenkrad 13 gezeigt. Auf einer Seite des Lenkrades 13, die in Richtung einer Beifahrerseite des - nicht gezeigten - Fahrzeuges weist, erstreckt sich von der Mitte der Instrumententafel 14 ausgehend in Richtung der Beifahrerseite das Displayeinstellsystem 10 mit einem Display 11 und einer Einstellvorrichtung 12 zur Einstellung einer Position des Displays 11 in einem Innenraum des - nicht gezeigten - Fahrzeuges. Die Einstellvorrichtung 12 ist eingerichtet, bei dem Wechsel von der manuellen Fahrt zu der pilotierten Fahrt, das Display 11 in seiner Position im Innenraum des Fahrzeug einzustellen. Dabei ist die Einstellvorrichtung 12 derart eingerichtet, dass sie das Display 11 entlang einer Mittellängsachse des - nicht gezeigten - Fahrzeuges in den Innenraum des - nicht gezeigten - Fahrzeuges verschiebt. Ausgehend von der in den Innenraum verschobenen Position des Displays 11 ist die Einstellvorrichtung 12 eingerichtet, das Display 11 quer zu der Längsachse des - nicht gezeigten - Fahrzeuges in eine zentrale Position einzustellen. Die Positionierung des Displays 11 entlang der Mittellängsachse und quer zu der Mittellängsachse des - nicht gezeigten - Fahrzeuges kann zeitgleich oder nacheinander erfolgen. Bei dem Wechsel von der manuellen Fahrt zu der pilotierten Fahrt wird die Positionierung des Displays 11 vorzugsweise zeitgleich mit einer Verstellung bzw. Einklappung des Lenkrades 13 durchgeführt.

Figur 1b zeigt eine schematische Drauf- und Seitenansicht der in Fig. 1a gezeigten Ausführungsform des Displayeinstellsystems 10 bei einer pilotierten Fahrt des - nicht gezeigten - Fahrzeuges. Bei der pilotierten Fahrt ist ein Lenkrad zur Steuerung des Fahrzeuges nicht unmittelbar erforderlich, so dass dieses, vorzugsweise bereits bei dem Wechsel von der manuellen Fahrt zu der pilotierten Fahrt - wie in Fig. 1 a gezeigt -, beispielsweise eingespart, verstellt oder eingeklappt werden kann. Das Displayeinstellsystem 10 mit der Einstellvorrichtung 12 ist eingerichtet, das Display 11 den neuen Anforderungen an die Position des Displays 11, die durch eine Veränderung der Position des Fahrzeuginsassen während der pilotierten Fahrt auftreten, anzupassen. So ist das Displayeinstellsystem 10 eingerichtet, das Display 11 mittels der Einstellvorrichtung 12 von einer ursprünglichen Position des Displays in der Instrumententafel 14 in eine zentrale Position in den Innenraum des Fahrzeuges einzustellen. Dabei umfasst die zentrale Position zumindest teilweise einen Bereich, in dem ehemals das Lenkrad angeordnet war. Der durch die Einsparung, das Verstellen oder das Einklappen des Lenkrades gewonnene neue Raum im Bereich der Instrumententafel des Fahrzeuges ermöglicht eine zentralere und leichter zugängliche Positionierung des Displays, da das zentral positionierte Display in dem Bereich angeordnet werden kann, der ehemals von dem Lenkrad benötigt wurde.

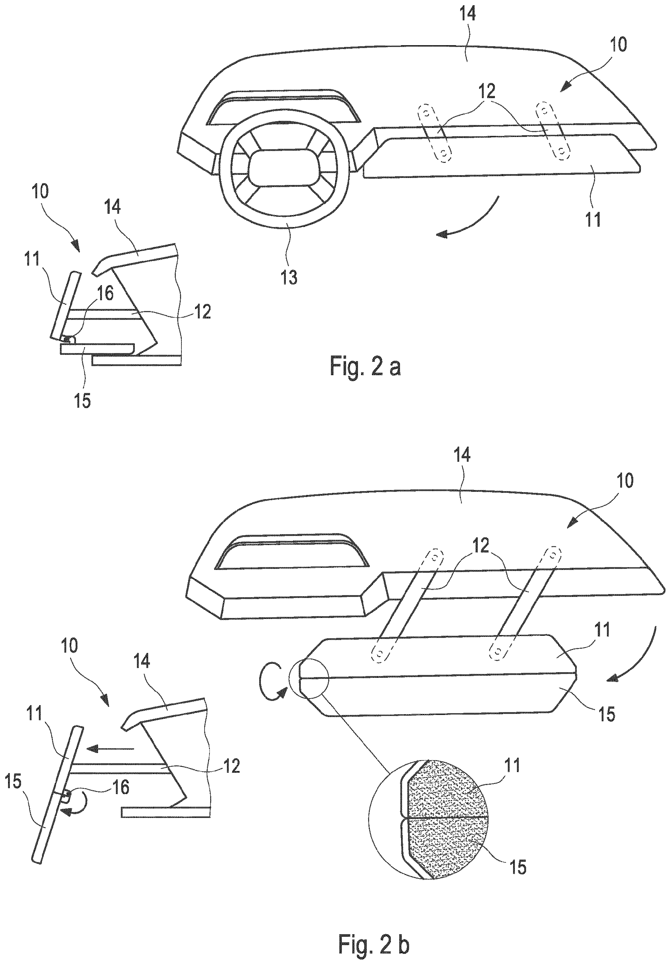

Fig. 2a zeigt eine schematische Drauf- und Seitenansicht der Ausführungsform des erfindungsgemäßen Displayeinstellsystems 10 mit einer Erweiterung des Displays bei einem Wechsel von einer manuellen Fahrt zu einer pilotierten Fahrt. Dabei ist ein Displayeinstellsystem 10, wie in Fig. 1a beschrieben, gezeigt, wobei das Display 11 des Displayeinstellsystems 10 erweiterbar ist. Das Display 11 ist über eine Klappvorrichtung 16 um eine Erweiterung bzw. eine Anzeigefläche, die vorzugsweise als Display eingerichtet ist, erweiterbar. Das Displayeinstellsystem 10 ist eingerichtet, bei dem Wechsel von der manuellen Fahrt zu der pilotierten Fahrt das Display 11 mittels der Einstellvorrichtung 12 in eine vorteilhaftere Position für den Fahrzeuginsassen, insbesondere den Fahrzeugführer, zu bringen. Dabei ist die Einstellvorrichtung 12 eingerichtet, das Display entlang der Mittellängsachse des Fahrzeuges und quer zu der Mittellängsachse des Fahrzeuges in Richtung des Fahrersitzes des Fahrzeuges einzustellen. Vorzugsweise wird zeitgleich mit der Positionierung des Displays 11 das Lenkrad 13 eingeklappt/verstellt oder abgenommen. Die Einstellvorrichtung 12 kann manuell durch einen Fahrzeuginsassen bzw. Fahrzeugführer ausgeführt werden. In der Regel kann der Fahrzeuginsasse bzw. Fahrzeugführer zudem manuell die Erweiterung bzw. die weitere Anzeigefläche 15 des Displays 11 ausklappen.

Fig. 2b zeigt eine schematische Drauf- und Seitenansicht der in Fig. 2a gezeigten Ausführungsform des erfindungsgemäßen Displayeinstellsystems 10 mit einer Erweiterung / weiteren Anzeigefläche 15 des Displays 11 bei der pilotierten Fahrt des - nicht gezeigten - Fahrzeuges. Dabei ist das Displayeinstellsystem 10 mit der Einstellvorrichtung 12 und dem Display 11 dargestellt. Das Displayeinstellsystem 10 ist eingerichtet, bei der pilotierten Fahrt vorzugsweise automatisch das Display 11 von der ursprünglichen Position in der Instrumententafel 14 entlang der Mittellängsachse und quer zu der Mittellängsachse des - nicht gezeigten - Fahrzeuges zu einer zentralen Position zu positionieren. Dabei ist das Displayeinstellsystem 10 vorzugsweise eingerichtet, bei einem Wechsel von der manuellen Fahrt zu der pilotierten Fahrt automatisch oder manuell die Anzeigefläche des Displays 11 mittels einer Erweiterung bzw. einer weiteren Anzeigefläche 15 zu erweitern. In der Regel ist die mindestens eine weitere Anzeigefläche 15 mittels einer Klappvorrichtung 16 an dem Display 11 befestigt. Die Klappvorrichtung 16 ist im Wesentlichen ein Scharnier, über das die weitere Anzeigefläche 15 ausgeklappt werden kann. Bei der manuellen Fahrt ist die Klappvorrichtung 16 typischerweise derart eingeklappt, dass diese im Wesentlichen horizontal in einem Winkel von annähernd 90° von einer Rückseite der Anzeigefläche des Displays 11, welche in Richtung der Instrumententafel 14 zeigt, angeordnet ist. Ferner ist in der Figur 2b eine Detailansicht der Anordnung der weiteren Anzeigefläche 15 an der Anzeigefläche des Displays 11 in einem ausgeklappten Zustand dargestellt. Eine Pixelfläche der Anzeigefläche des Display 11 grenzt dabei direkt an eine Pixelfläche der weiteren Anzeigefläche 15.

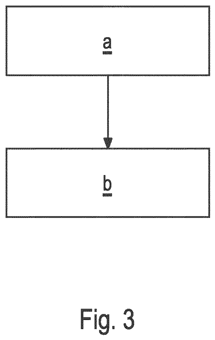

Fig. 3 zeigt einen schematischen Verlauf einer Ausführungsform des erfindungsgemäßen Verfahrens zur Positionierung des Displays 10 in dem - nicht gezeigten - Fahrzeug umfassend ein voranstehend beschriebenes Displayeinstellsystem 10. In einem Schritt wird die Positionierung des Displays 11 durch die Einstellvorrichtung 12 ausgehend von der ursprünglichen Position des Displays 11 in der Instrumententafel 14 entlang der Mittellängsachse des Fahrzeuges in Richtung eines Hecks des Fahrzeuges durchgeführt, und in einem weiteren Schritt, der zeitgleich oder nachfolgend ausgeführt wird, wird die Positionierung des Displays 11 durch die Einstellvorrichtung 12 quer zu der Mittellängsachse des Fahrzeuges in Richtung des Fahrersitzes des Fahrzeuges durchgeführt und dadurch das Display 11 in die zentrale Position in dem Innenraum des - nicht gezeigten-Fahrzeuges eingestellt. Das erfindungsgemäße Verfahren ist bei einer rein pilotierten Fahrt oder bei einem Wechseln von einer manuellen Fahrt zu einer pilotierten Fahrt ausführbar.

### Bezugszeichenliste

- 10: Displayeinstellsystem
- 11: Display
- 12: Einstellvorrichtung
- 13: Lenkrad
- 14: Instrumententafel
- 15: weitere Anzeigefläche / Erweiterung
- 16: Klappvorrichtung

## Patentansprüche

1. Displayeinstellsystem (10) für eine Instrumententafel (14) in einem Fahrzeug, umfassend ein Display (11) und eine Einstellvorrichtung (12), wobei die Einstellvorrichtung (12) eingerichtet ist, das Display (11) von einer ursprünglichen Position in der Instrumententafel (14) des Fahrzeuges in eine zentrale Position in einem Innenraum des Fahrzeuges einzustellen, wobei eine zentrale Position eine Position ist, die mittig zwischen den Vordersitzen des Fahrzeuges ausgebildet ist und somit sowohl für einen Fahrzeugführer als auch für einen Beifahrer des Fahrzeuges gleich leicht zugänglich ist, wobei die Einstellvorrichtung (12) eingerichtet ist, das Display (11) entlang einer Mittellängsachse des Fahrzeuges und quer zu der Mittellängsachse des Fahrzeuges einzustellen, und eine Anzeigefläche des Displays (11) erweiterbar ist, **dadurch gekennzeichnet, dass** die Anzeigefläche des Displays (11) um eine weitere Anzeigefläche erweitert wird, wobei die weitere Anzeigefläche mittels einer Klappvorrichtung an dem Display angeordnet ist und bei einer pilotierten Fahrt eine Einstellung des Displays (11) entlang der Mittellängsachse des Fahrzeuges erfolgt, wodurch ein Abstand des Displays zu der Instrumententafel (14) vergrößert wird, wobei durch die Vergrößerung des Abstandes zwischen dem Display (11) und der Instrumententafel (14) der Abstand der eingeklappten Anzeigefläche zu dem Gehäuse der Instrumententafel (14) erhöht und schließlich kontaktlos wird, wodurch die Klappvorrichtung ausgelöst wird und die mindestens eine weitere Anzeigefläche aufgeklappt wird, wodurch die Anzeigefläche des Displays (11) insgesamt vergrößert wird.

2. Displayeinstellungssystem (10) nach einem der voranstehenden Ansprüche, **dadurch gekennzeichnet, dass** das Displayeinstellsystem (10) eingerichtet ist, die Position des Displays (11) bei einer pilotierten Fahrt des Fahrzeuges automatisch einzustellen.

3. Displayeinstellsystem (10) nach Anspruch 1 oder 2, **dadurch gekennzeichnet, dass** die Einstellvorrichtung (12) eingerichtet ist, bei einem Wechsel von einer manuellen Fahrt des Fahrzeuges zu einer pilotierten Fahrt des Fahrzeuges das Display (11) automatisch von der ursprünglichen Position in der Instrumententafel (14) in die zentrale Position in dem Innenraum des Fahrzeuges einzustellen.

4. Verfahren zur Positionierung eines Displays (11) in einem Fahrzeug umfassend ein Displayeinstellsystem (10) nach einem der Ansprüche 1 bis 3 mit den Schritten:
a) Positionierung des Displays (11) durch die Einstellvorrichtung (12) ausgehend von der ursprünglichen Position des Displays (11) in der Instrumententafel (14) entlang der Mittellängsachse des Fahrzeuges in Richtung eines Hecks des Fahrzeuges, und
b) Positionierung des Displays (11) durch die Einstellvorrichtung (12) quer zu der Mittellängsachse des Fahrzeuges in Richtung eines Fahrersitzes des Fahrzeuges und dadurch Einstellen des Displays (11) in die zentrale Position in dem Innenraum des Fahrzeuges.

5. Verfahren nach Anspruch 4, wobei das Verfahren bei einer pilotierten Fahrt des Fahrzeuges oder bei einem Wechsel von einer manuellen Fahrt des Fahrzeuges zu der pilotierten Fahrt des Fahrzeuges ausgeführt wird.

6. Verfahren nach Anspruch 4 oder 5, wobei eine Anzeigefläche des Displays (11) erweitert wird.

7. Verfahren nach einem der Ansprüche 4 bis 6, wobei bei einer Beendigung einer pilotierten Fahrt des Fahrzeuges die Einstellvorrichtung das Display (11) von der zentralen Position in dem Innenraum des Fahrzeuges in die ursprüngliche Position in der Instrumententafel zurückführt.

8. Fahrzeug umfassend ein Displayeinstellsystem (10) nach einem der Ansprüche 1 bis 3.

## Claims

1. Display adjustment system (10) for an instrument panel (14) in a vehicle, comprising a display (11) and an adjustment device (12), wherein the adjustment device (12) is configured to adjust the display (11) from an original position in the instrument panel (14) of the vehicle to a central position in an interior of the vehicle, wherein a central position is a position formed centrally between front seats of the vehicle and is thus equally easily accessible by both a driver of the vehicle and a front seat passenger of the vehicle, wherein the adjustment device (12) is configured to adjust the display (11) along a central longitudinal axis of the vehicle and transverse to the central longitudinal axis of the vehicle, and a display area of the display (11) can be extended, **characterised in that** the display area of the display (11) is extended by an additional display area, wherein the additional display area is arranged on the display by means of a folding device and in a piloted driving mode the display (11) is adjusted along the central longitudinal axis of the vehicle, whereby a distance of the display from the instrument panel (14) is increased, whereby by increasing the distance between the display (11) and the instrument panel (14) the distance of the folded in display area to the housing of the instrument panel (14) is increased and is finally contactless, whereby the folding device is triggered and the at least one additional display area is unfolded thereby increasing the display area of the display (11) overall.

2. Display adjustment system (10) according to any of the preceding claims, **characterised in that** the display adjustment system (10) is configured to adjust the position of the display (11) in a piloted driving mode of the vehicle.

3. Display adjustment system (10) according to claim 1 or 2, **characterised in that** the adjustment device (12) is configured, when there is a change from a manual driving mode of the vehicle to a piloted driving mode of the vehicle, to adjust the display (11) automatically from the original position in the instrument panel (14) to the central position in the interior of the vehicle.

4. Method for positioning a display (11) in a vehicle comprising a display adjustment system (10) according to any of claims 1 to 3 with the steps:
a) positioning the display (11) with the adjustment device (12) from the original position of the display (11) in the instrument panel (14) along the central longitudinal axis of the vehicle in the direction of a rear part of the vehicle, and
b) positioning the display (11) by the adjustment device (12) in a transverse direction with respect to the central longitudinal axis of the vehicle in the direction of a driver's seat of the vehicle and thereby adjusting the display (11) into the central position in the interior of the vehicle.

5. Method according to claim 4, wherein the method is performed during a piloted driving mode of the vehicle or when changing from a manual driving mode of the vehicle to the piloted driving mode of the vehicle.

6. Method according to claim 4 or 5, wherein a display area of the display (11) is extended.

7. Method according to any of claims 4 to 6, wherein at the end of a piloted driving mode of the vehicle the adjustment device moves the display (11) from the central position in the interior of the vehicle back to the original position in the instrument panel.

8. Vehicle comprising a display adjustment system (10) according to any of claims 1 to 3.

## Revendications

1. Système d'ajustement d'affichage (10) pour un tableau de bord (14) d'un véhicule, comprenant un affichage (11) et un dispositif d'ajustement (12), dans lequel le dispositif d'ajustement (12) est conçu pour ajuster l'affichage (11) à partir d'une position d'origine dans le tableau de bord (14) du véhicule jusqu'à une position centrale dans un espace intérieur du véhicule, dans lequel une position centrale est une position qui est réalisée de manière centrale entre les sièges avant du véhicule et qui est ainsi aussi facilement accessible pour un conducteur du véhicule que pour un passager du véhicule, dans lequel le dispositif d'ajustement (12) est conçu pour ajuster l'affichage (11) le long d'un axe longitudinal central du véhicule et de manière transversale par rapport à l'axe longitudinal central du véhicule, et une surface de visualisation de l'affichage (11) peut être agrandie, **caractérisé en ce que** la surface de visualisation de l'affichage (11) est agrandie par une surface de visualisation supplémentaire, dans lequel la surface de visualisation supplémentaire est agencée au niveau de l'affichage au moyen d'un dispositif pliant et un ajustement de l'affichage (11) intervient le long de l'axe longitudinal central du véhicule lors d'un trajet piloté, ce qui permet d'augmenter la distance de l'affichage par rapport au tableau de bord (14), dans lequel la distance de la surface de visualisation repliée par rapport au boîtier du tableau de bord (14) est augmentée jusqu'à ce qu'il n'y ait finalement plus de contact du fait de l'augmentation de la distance entre l'affichage (11) et le tableau de bord (14), ce qui permet de déclencher le dispositif pliant et de déplier la au moins une surface de visualisation supplémentaire, ce qui permet d'agrandir la surface de visualisation de l'affichage (11) dans son ensemble.

2. Système d'ajustement d'affichage (10) selon l'une quelconque des revendications précédentes, **caractérisé en ce que** le système d'ajustement d'affichage (10) est conçu pour ajuster de manière automatique la position de l'affichage (11) lors d'un trajet piloté du véhicule.

3. Système d'ajustement d'affichage (10) selon la revendication 1 ou 2, **caractérisé en ce que** le dispositif d'ajustement (12) est conçu pour ajuster de manière automatique l'affichage (11) à partir de la position d'origine dans le tableau de bord (14) jusqu'à la position centrale dans l'espace intérieur du véhicule lors d'un passage d'un trajet manuel du véhicule à un trajet piloté du véhicule.

4. Procédé de positionnement d'un affichage (11) dans un véhicule, comprenant un système d'ajustement d'affichage (10) selon l'une quelconque des revendications 1 à 3, avec les étapes consistant à
a) positionner l'affichage (11) grâce au dispositif d'ajustement (12) à partir de la position d'origine de l'affichage (11) dans le tableau de bord (14) le long de l'axe longitudinal central du véhicule dans la direction de l'arrière du véhicule, et
b) positionner l'affichage (11) grâce au dispositif d'ajustement (12) de manière transversale par rapport à l'axe longitudinal central du véhicule en direction d'un siège de conducteur du véhicule et ajuster ainsi l'affichage (11) jusqu'à la position centrale dans l'espace intérieur du véhicule.

5. Procédé selon la revendication 4, dans lequel le procédé est mis en œuvre lors d'un trajet piloté du véhicule ou lors d'un passage d'un trajet manuel du véhicule à un trajet piloté du véhicule.

6. Procédé selon la revendication 4 ou 5, dans lequel une surface de visualisation de l'affichage (11) est agrandie.

7. Procédé selon l'une quelconque des revendications 4 à 6, dans lequel, à la fin d'un trajet piloté du véhicule, le dispositif d'ajustement ramène l'affichage (11) de la position centrale dans l'espace intérieur du véhicule à la position d'origine dans le tableau de bord.

8. Véhicule comprenant un système d'ajustement d'affichage (10) selon l'une quelconque des revendications 1 à 3.
